# EUROPEAN PATENT SPECIFICATION

(11) **EP 2 168 470 B1**
(45) Date of publication and mention of the grant of the patent: **06.04.2011**
(21) Application number: 08425631.2
(22) Date of filing: 25.09.2008
(51) Int. Cl.: A47L 15/42, A47L 15/48

(54) **Hood-type industrial dishwasher with heat-recovery system**
Hauben-Geschirrspüllmaschine mit Wärmerückgewinnungsvorrichtung
Lave-vaisselle à capot avec système de récupération de la chaleur

(43) Date of publication of application: 31.03.2010
(73) Proprietor: Bonferraro S.p.A., 37060 Bonferraro (VR) (IT)
(72) Inventor: Gobbi, Ezio, 46037 Roncoferraro (MN) (IT)
(74) Representative: Concone, Emanuele

(56) References cited:
- EP-A- 1 690 489
- WO-A-2006/069834
- DE-A1- 10 122 927
- DE-A1-102005 046 733
- DE-A1-102007 004 599

## Description

The present invention relates to industrial dishwashers, and in particular to a hood-type dishwasher with a heat-recovery system aimed at more effectively exploiting the heat of the air contained in the wash chamber.

It is known that an industrial dishwasher usually includes a heat-recovery system to pre-heat the network water used by the dishwasher for the following cycles. This system, generally located in the rear wall of the stationary lower half of the dishwasher, exploits the passage of hot air that is sucked away from the wash chamber at the end of the wash cycle, typically during the drying phase, and passes through a heat exchanger prior to being discharged from the dishwasher. A dishwasher of this kind is disclosed, for example, in DE-102005046733-A1.

However, this heat-recovery system implies the rapid introduction into the dishwasher of a great amount of external air that causes a fast cooling of the air contained in the wash chamber. In fact, upon activation of the fan that causes the passage of air through the exchanger, the hot air in the wash chamber is inevitably mixed with much cooler room temperature air that enters through slots and passages suitably formed to prevent the wash chamber from having a negative pressure.

Test carried out by the applicant have leaded to the estimate that usually the mixing of hot air and room temperature air takes place with an estimated ratio of 40-50% of hot air and 50-60% of room temperature air. This means that when the air inside the wash chamber is at about 65°C and the outside environment is at about 23°C, the mixed air entering the heat exchanger is at about 40-41°C whereas the air at the outlet of the exchanger where the network water enters at 15-20°C is discharged at about 27-28°C.

In these conditions it is clear that the heat exchange and therefore the heat recovery is limited, due to the small difference in temperature between the air entering the exchanger and the water coming from the network. Moreover, it must be considered that the water to be heated remains in the heat exchanger for a short time and also the fan operating time is usually short in order to not excessively extend the duration of the dishwasher operating cycle.

As a result, when the water to be heated enters the heat exchanger at 15°C and the air enters at 40°C the water leaves the exchanger at not more than 30-32°C even with a very effective exchanger.

An improvement over this type of dishwasher is represented by the dishwasher disclosed in EP 1690489A2, which is provided with a dish drying system of the fan type comprising an air circulation circuit that includes the washing chamber. Specifically, this dishwasher includes a duct in heat exchanging relationship with a condensation container containing water to be fed to the washing chamber, the inlet of the duct being located in the top part of the chamber and the outlet in the middle/lower part of the chamber.

In order to heat the water contained in the condensation container, the control device of the dishwasher activates the fan not only during the dish drying stages but also during at least one hot washing stage. However, this document is silent about the time and duration of the activation of the fan and it can be reasonably assumed that these are fixed parameters programmed in the control device as in other prior art dishwashers.

In this way it is hardly possible to achieve the maximum energy saving, since the fan will be activated early or late with respect to the ideal time when the air in the chamber reaches the minimum temperature useful for heat recovery and similarly the duration of the activation will not correspond to the ideal duration that ends when the air temperature drops below said minimum. This results in a waste of heat and possibly an unnecessary lengthening of the cycle.

Therefore the object of the present invention is to provide a hood-type industrial dishwasher which overcomes the above-mentioned drawbacks. This object is achieved by means of a hood-type industrial dishwasher provided with a heat-recovery system with an air recirculation circuit, said system preferably comprising a portion of the circuit formed in the hood with the circuit inlet at the top of the hood, and temperature sensors located upstream and/or downstream from the heat exchanger that are operatively connected to the control unit controlling the operation of the fan. Other advantageous features of the present industrial dishwasher are disclosed in the dependent claims.

The main advantage of the dishwasher according to the present invention is that of performing a more effective heat-recovery thanks to the possibility of activating the recirculation fan not only at the end of the wash cycle but also every time the air inside the wash chamber reaches a preset value that guarantees to be able to increase the temperature of the network water that enters the exchanger. This allows a further heat-recovery during the pause periods of the dishwasher when the water in the wash cycle is kept at 60°C, ready for subsequent wash cycles, and also to decrease the heat dissipation through the hood.

Another advantage of the above-mentioned dishwasher, in particular with respect to dishwashers with air discharge drying, is that of being able to activate the recirculation fan not only for a preset time depending on the selected wash cycle, but also for different operating times according to need. In fact, even if industrial dishwashers operate for short times due to the need to have clean dishes rapidly available, it is clear that there are moments during the working day when the use is not so intensive.

At these moments a greater energy saving can be achieved by extending the operating time of the fan, which is turned off when the temperature sensor downstream from the heat exchanger detects that the air is no longer at a temperature sufficient to obtain a suitable heat recovery. This is obviously not possible in conventional dishwashers without temperature sensors, in particular those with air discharge drying where the massive inflow of colder air rapidly decreases the temperature to values unsuitable for heat recovery, whereby an extension of the fan operating time would only result in a waste of time and power.

These and other advantages and characteristics of the industrial dishwasher according to the present invention will be clear to those skilled in the art from the following detailed description of an embodiment thereof, with reference to the annexed drawings wherein:

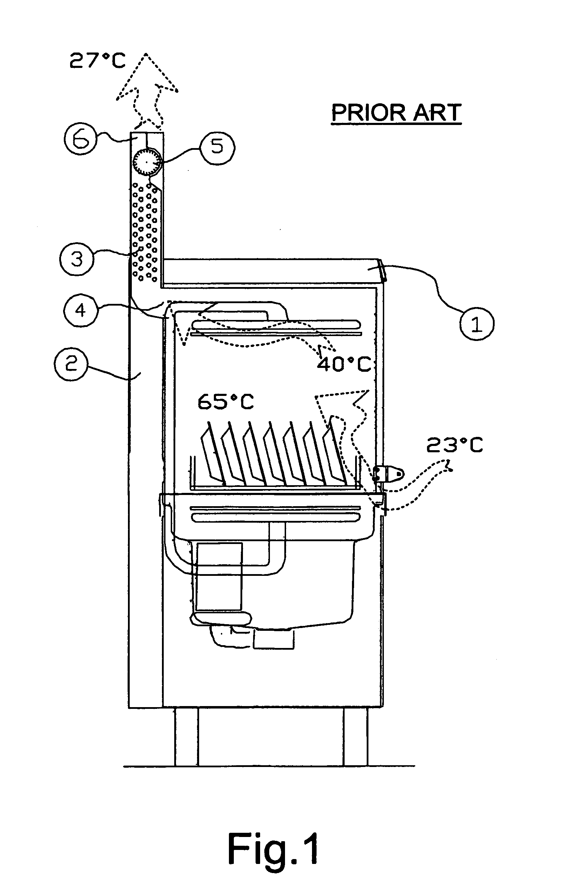

Fig. 1 is a diagrammatic side view of a prior art hood-type dishwasher showing the air flows with the relevant temperatures; and
Fig-.2 is a view similar to the preceding one of a dishwasher according to the present invention showing the air recirculation.

Referring to Fig.1, there is seen that a prior art hood-type industrial dishwasher conventionally includes a wash chamber defined by a hood 1 vertically slidable along the rear wall 2 of the stationary lower part, inside which a heat exchanger 3 is arranged. To recover the heat, the air coming from the wash chamber enters exchanger 3 through an inlet 4 formed in wall 2 at the top of the chamber, passes through exchanger 3 due to the suction produced by a fan 5 located downstream from exchanger 3 and is finally discharged to the environment through an outlet 6.

As previously mentioned, tests carried out by the applicant have shown the poor effectiveness of such a heat-recovery system. More specifically, starting from a temperature of the air in the wash chamber of 65°C, a temperature of the network water of 15°C and a room temperature of 23°C there is obtained a temperature of the water leaving the exchanger at 32°C while the air is discharged at 27°C.

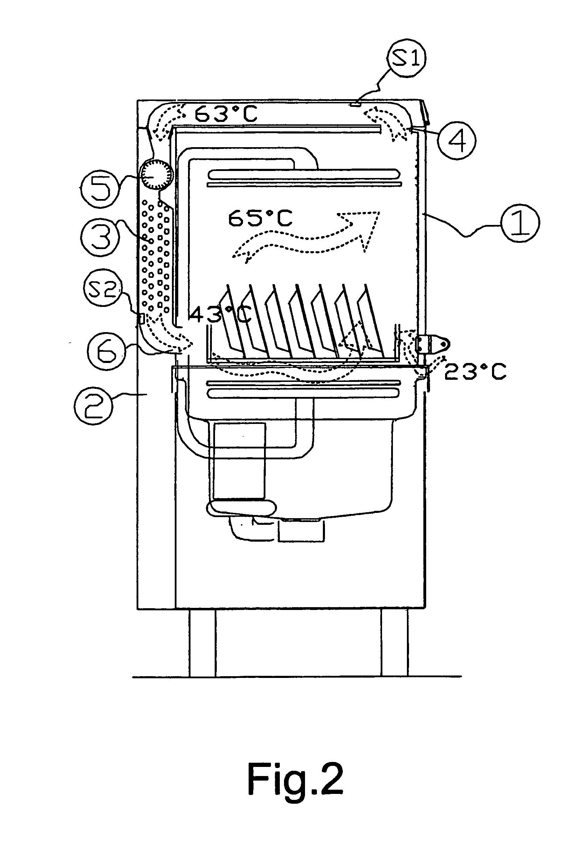

The novel aspect of the industrial dishwasher according to the present invention is now illustrated with reference to Fig.2.

In the illustrated preferred embodiment, the air inlet 4 towards the heat exchanger 3, which is still arranged in the rear wall 2 yet at a lower position behind the wash chamber, is formed at the top of hood 1 along the front edge thereof, whereas outlet 6 is formed in the lower rear portion of the wash chamber for the reintroduction of the partially cooled air.

Fan 5, preferably a tangential fan in order to reduce its bulkiness, is arranged in this case upstream from exchanger 3 (but it could also be downstream therefrom), while two temperature sensors S1, S2 are respectively arranged at the beginning and at the end of the recirculation circuit, i.e. close to inlet 4 and outlet 6.

The simple and effective operation of the heat-recovery system of the dishwasher according to the present invention will be readily understood from the description given above.

As shown in Fig.2, when fan 5 is activated air circulates between inlet 4 at the top of the wash chamber and outlet 6 at the bottom of the wash chamber. Therefore an effective air recirculation is achieved, with just a minimal inflow of external air, which affects the whole wash chamber and can proceed until the temperature sensor S2 detects that the air has cooled down too much to obtain an effective heat recovery.

For example, if it is generally necessary to have a fan 5 operating time of at least 30" to obtain a certain heat recovery, with the present dishwasher it is possible to provide an "ecologic" wash cycle with a longer operating time approximately between 45" and 75" (possibly settable by the user) or to use the detection of sensor S2 to determine the moment for stopping fan 5.

It should be noted that it is even possible to exploit the greater effectiveness of the heat-recovery system of the present dishwasher to achieve the same temperature of the water leaving exchanger 3 in a shorter time, thus reducing the overall length of the dishwasher operating cycle.

By way of comparison with the previously described prior art dishwasher disclosed in DE-102005046733-A1, the tests carried out by the applicant have shown that starting from the same conditions (air temperature in the wash chamber of 65°C, network water temperature of 15°C and room temperature of 23°C) through the heat-recovery system of the present dishwasher there is obtained a temperature of the water leaving the exchanger at 38°C while the air is reintroduced ino the wash chamber at 43°C and thus can be used again to recover further heat.

Based on these values, it has been estimated that the mixing of hot air and room temperature air takes place with a ratio of about 97% of hot air and 3% of room temperature air.

It is clear that the above-described and illustrated embodiment of the dishwasher according to the invention is just an example susceptible of various modifications. In particular, the exact shape and arrangement of the members could be changed according to specific manufacturing needs, e.g. by forming inlet 4 in wall 2 at the top of the wash chamber as in prior art dishwashers without forming a portion of the recirculation circuit in hood 1, or by changing the position of outlet 6 , as long as the general air recirculation structure of the heat-recovery system is retained.

Similarly, only one of the temperature sensors S1 and S2 could be present, or on the contrary other temperature sensors could be provided (e.g. in the wash chamber or upstream from exchanger 3) for a more accurate control of the system.

## Claims

1. Hood-type industrial dishwasher with a wash chamber defined by a hood (1) and by a rear vertical wall (2) that makes part of the stationary lower part of the dishwasher, as well as with a heat-recovery system comprising a heat exchanger (3) through which air coming from said wash chamber passes by entering through an inlet (4) and leaving through an outlet (6) due to the suction produced by a fan (5), **characterized in that** said outlet (6) is in communication with the wash chamber so as to obtain an air recirculation circuit, and that it further includes a temperature sensor (S1) arranged close to the inlet (4) and/or a temperature sensor (S2) arranged close to the outlet (6), the operation of said fan (5) being controlled by a control unit operatively connected to one or both temperature sensors (S1, S2).

2. Hood-type industrial dishwasher according to claim 1, **characterized in that** the air inlet (4) is formed at the top of the hood (1) along the front edge thereof.

3. Hood-type industrial dishwasher according to claim 1 or 2, **characterized in that** the air outlet (6) is connected to the wash chamber in the lower rear portion thereof.

4. Hood-type industrial dishwasher according to any of the preceding claims, **characterized in that** the heat exchanger (3) is arranged in the rear wall (2) behind the wash chamber.

5. Hood-type industrial dishwasher according to any of the preceding claims, **characterized in that** the fan (5) is a tangential fan.

6. Hood-type industrial dishwasher according to any of the preceding claims, **characterized in that** the fan (5) is arranged upstream from the heat exchanger (3).

7. Hood-type industrial dishwasher according to any of the preceding claims, **characterized in that** it further includes means for setting the duration of the operating time of the fan (5).

## Patentansprüche

1. Gewerbliche Geschirrspülmaschine mit Haube mit einem Spülraurm, der von einer Haube (1) und einer senkrechten Rückwand (2) definiert wird, die Teil des feststehenden unteren Teils der Geschirrspülmaschine ist, sowie mit einem Wärmerückgewinnungssystem, das einen Wärmetauscher (3) umfasst, durch den Luft strömt, die aus dem Spülraum kommt, indem sie bedingt durch die Sogwirkung eines Gebläses (5) durch einen Einlass (4) einströmt und durch einen Auslass (6) hinausströmt, **dadurch gekennzeichnet, dass** der Auslass (6) mit dem Spülraum in Verbindung steht, um einen Luftrückführungskreislauf zu erhalten, und dass sie ferner einen Temperatursensor (S1) aufweist, der nahe am Einlass (4) angeordnet ist, und/oder einen Temperatursensor (S2), der nahe am Auslass (6) angeordnet ist, wobei der Betrieb des Gebläses (5) von einer Steuereinheit gesteuert wird, die mit einem oder beiden Temperatursensoren (S1, S2) in Wirkverbindung steht.

2. Gewerbliche Geschirrspülmaschine mit Haube nach Anspruch 1, **dadurch gekennzeichnet, dass** der Lufteinlass (4) an der Oberseite der Haube (1) entlang der Vorderkante derselben gebildet ist.

3. Gewerbliche Geschirrspülmaschine mit Haube nach Anspruch 1 oder 2, **dadurch gekennzeichnet, dass** der Luftauslass (6) am unteren hinteren Abschnitt des Spülraums mit dem Spülraum verbunden ist.

4. Gewerbliche Geschirrspülmaschine mit Haube nach einem der vorhergehenden Ansprüche, **dadurch gekennzeichnet, dass** der Wärmetauscher (3) an der Rückwand (2) hinter dem Spülraum angeordnet ist.

5. Gewerbliche Geschirrspülmaschine mit Haube nach einem der vorhergehenden Ansprüche, **dadurch gekennzeichnet, dass** das Gebläse (5) ein Tangentialgebläse ist.

6. Gewerbliche Geschirrspülmaschine mit Haube nach einem der vorhergehenden Ansprüche, **dadurch gekennzeichnet, dass** das Gebläse (5) in Strömungsrichtung vor dem Wärmetauscher (3) angeordnet ist.

7. Gewerbliche Geschirrspülmaschine mit Haube nach einem der vorhergehenden Ansprüche, **dadurch gekennzeichnet, dass** sie ferner Mittel zum Einstellen der Betriebsdauer des Gebläses (5) aufweist.

## Revendications

1. Lave-vaisselle industriel du type à capot, comprenant une chambre de lavage définie par un capot (1) et par une paroi verticale arrière (2) qui fait partie de la partie inférieure stationnaire du lave-vaisselle, ainsi qu'un système de récupération de chaleur comprenant un échangeur de chaleur (3) à travers lequel passe de l'air provenant de ladite chambre de lavage, entrant par une entrée (4) et sortant par une sortie (6) en raison de l'aspiration produite par un ventilateur (5), **caractérisé en ce** ladite sortie (6) est en communication avec la chambre de lavage afin d'obtenir un circuit de recirculation d'air, et en ce qu'il comprend en outre un capteur de température (S1) aménagé à proximité de l'entrée (4) et/ou un capteur de température (S2) aménagé à proximité de la sortie (6), le fonctionnement dudit ventilateur (5) étant commandé par une unité de commande connectée en service à l'un ou aux deux capteurs de température (S1, S2).

2. Lave-vaisselle industriel du type à capot selon la revendication 1, **caractérisé en ce que** l'entrée d'air (4) est formée sur la partie supérieure du capot (1) le long de son bord frontal.

3. Lave-vaisselle industriel du type à capot selon la revendication 1 ou 2, **caractérisé en ce que** la sortie d'air (6) est raccordée à la chambre de lavage dans sa partie inférieure arrière.

4. Lave-vaisselle industriel du type à capot selon l'une quelconque des revendications précédentes, **caractérisé en ce que** l'échangeur de chaleur (3) est aménagé dans la paroi arrière (2) derrière la chambre de lavage.

5. Lave-vaisselle industriel du type à capot selon l'une quelconque des revendications précédentes, **caractérisé en ce que** le ventilateur (5) est un ventilateur tangentiel.

6. Lave-vaisselle industriel du type à capot selon l'une quelconque des revendications précédentes, **caractérisé en ce que** le ventilateur (5) est aménagé en amont de l'échangeur de chaleur (3).

7. Lave-vaisselle industriel du type à capot selon l'une quelconque des revendications précédentes, **caractérisé en ce qu'**il comprend en outre des moyens pour régler la durée du temps de fonctionnement du ventilateur (5).
